Europäisches Patentamt

European Patent Office

Office européen des brevets

(11) Numéro de publication: **0 054 505
B1**

(12) **FASCICULE DE BREVET EUROPEEN**

(45) Date de publication du fascicule du brevet: **22.05.85**

(21) Numéro de dépôt: **81430043.0**

(22) Date de dépôt: **09.12.81**

(51) Int. Cl.⁴: **G 11 B 23/04,** G 11 B 27/34

(54) Dispositif de comptage du nombre de passages pour la lecture d'une cassette à rubans ou films, supports de sons et/ou d'images ou autres signaux, et/ou de blocage au-delà d'un nombre de passages déterminés au préalable.

(30) Priorité: 12.12.80 FR 8026625
24.11.81 FR 8122204

(43) Date de publication de la demande:
**23.06.82 Bulletin 82/25**

(45) Mention de la délivrance du brevet:
**22.05.85 Bulletin 85/21**

(84) Etats contractants désignés:
**AT BE CH DE GB IT LI LU NL SE**

(56) Documents cités:
**DE - A - 2 808 861
FR - A - 2 051 480
FR - A - 2 066 235
FR - A - 2 129 050
FR - A - 2 188 906
FR - A - 2 296 907
GB - A - 1 490 062
US - A - 3 761 643
US - A - 4 217 614**

(73) Titulaire: **CHECK VIEW SYSTEM société Anonyme,
15 Quai de l'Ile, CH-1204 Geneve (CH)**

(72) Inventeur: **Chevalier, Louis, Impasse des Narcisses
route de la Gaude, F-06800 Cagnes Sur Mer (FR)**
Inventeur: **Coudert, Jean, 44, rue de la Vilette,
F-06100 Nice (FR)**

(74) Mandataire: **Hautier, Jean-Louis, OFFICE
MEDITERRANEEN DE BREVETS D'INVENTION 24 rue
Masséna, F-06000 Nice (FR)**

ACTORUM AG

## Description

L'invention a pour objet un dispositif de comptage du nombre de passages pour la lecture d'une cassette à rubans ou films supports de sons et/ou d'images ou tous autres signaux et un dispositif permettant de prédéterminer un nombre de passages au-delà duquel il a un blocage verrouillable.

Actuellement, la grande diffusion des appareils d'enregistrement et de lecture de cassettes permet la contrefaçon d'œuvres musicales, de cinématographies, de chansons vidéogrammes par la duplication et la multiplication de cassettes vendues dans le commerce, sur des cassettes vierges. Les contrefacteurs qui réenregistrent ou repiquent des cassettes ou vidéogrammes n'ont aucune autorisation des maisons de diffusion et, bien entendu, des auteurs de l'œuvre enregistrée. Ces copies de cassettes créent donc un grand préjudice aux vendeurs, aux éditeurs et aux auteurs. Par ailleurs, l'engouement pour des appareils d'enregistrement et les cassettes notamment pour la télévidéo a suscité la création d'entreprises commerciales ou de clubs de location de cassettes.

L'invention telle que définie dans la revendication 1 évite tous ces inconvénients. En effet, un compteur non accessible à l'utilisateur permet de connaître le nombre de fois où la cassette a été passée. Le loueur peut ainsi faire payer la cassete louée au nombre de passages et percevoir des droits en fonction des auteurs de l'œuvre et du nombre de reproduction de passages. Le loueur peut également se rendre compte si l'utilisateur passe un nombre de fois trop élevé sa cassette et si, par conséquent, il copie les cassettes louées ou si la cassette louée doit être retirée de la location après un nombre de passages prédéterminé, après lequel la cassette est considérée usée mécaniquement; le loueur peut alors signaler la contrefaçon aux organismes chargés du recouvrement des droits d'auteur.

A cet effet, le dispositif selon l'invention, adaptable sur n'importe quelle cassette actuellement dans le commerce, permet de compter le nombre de passages de la cassette. Le dispositif selon l'invention comporte au moins un moyen faisant office de palpeur qui réagit aux variations d'épaisseur des galettes d'enroulement du ruban de la bande vidéo ou bande sonore. La galette est composée par les tours d'enroulement du ruban ou film sur la bobine. Ledit palpeur peut être monté sur une pendule qui agit lorsque le ruban ou la bande d'une des galettes se vide complètement pour faire tourner un compteur qui indique le nombre de passages. Le palpeur peut, également, lorsqu'une des galettes de ruban est complètement déroulée, agir sur le compteur d'un demi cran et, lorsque la galette est réembobinée, agir à nouveau d'un demi cran sur le compteur indiquant ainsi que le passage de la cassette est complet. Sur une colonne est disposée une came reliée à deux branches ou pendulaires. Chaque branche ou pendulaire comporte à son extrémité un palpeur. Ledit palpeur consiste en un galet ou contacteur qui frotte ou qui roule sur le sommet ou périphérie de la galette du ruban et qui fait actionner, par son déplacement ladite came qui, à son tour, fait basculer le balancier qui fait avancer d'un cran ou d'un demi cran une roue dentée qui affiche par une fenêtre le numéro correspondant au nombre de passages. Le palpeur se déplace en fonction de l'épaisseur de la galette formée par l'enroulement du ruban sur la bobine. L'ensemble de ce dispositif est très plat, de manière à pouvoir être monté, à quelques adaptations près, sur n'importe quelle cassette actuellement dans le commerce. Ce dispositif de comptage du nombre de passages ou de lecture d'utilisation ne se limite pas aux cassettes, mais peut s'appliquer également aux cartouches, films bobines ou rubans de quelque nature que ce soit. Lesdits supports enregistreurs ou enregistrés peuvent, bien entendu, servir à toutes les diffusions d'enregistrements de signaux de toutes natures, d'images, de sons ou toutes autres informations.

Le dispositif, selon l'invention, peut s'adapter à toutes les cassettes, il suffit de modifier légèrement les colonnes de soutien de la contreplaque du boîtier de la cassette ainsi que l'entraxe desdites colonnes, de modifier également l'entraxe de la roue crantée avec la came, ainsi que la longeur des pendulaires.

Un autre mode de réalisation, selon l'invention, permet de prévoir un logement du ou desdits dispositifs cités, intégrés dans le fond du boîtier de la cassette. Le dispositif prévu selon le premier mode de réalisation permet certaines fraudes. Ainsi l'utilisateur averti peut arrêter le déroulement de la cassette peu avant la fin de la bande de manière à éviter que le compteur tourne et marque le passage d'un défilement complet. En effet, selon le premier mode de réalisation, l'enclenchement d'un demi cran de la roue se fait en fin d'enroulement ou de déroulement de la bande d'une galette. Afin d'éviter la fraude, par un utilisateur averti, qui aurait repéré le début d'enclenchement du compteur et qui pourrait ainsi utiliser la cassette en faisant abstraction d'un peu de début et d'un peu de fin de bande, le moment de déclenchement de la roue de comptage est modifié. Les dimensions relatives des différents éléments du compteur sont modifiées pour que l'enclenchement dudit compteur s'effectue, par exemple, au milieu du déroulement de la bande, les modifications mécaniques tendent à neutraliser environ un sixième de course au début et à la fin du défilement.

Un autre perfectionnement permet avec ou sans le dispositif de comptage de prédéterminer un nombre de passages au-delà duquel il y a un blocage verrouillable. Ce dispositif pour simplifier est appelé, dans la suite de la description, le blocage cassette. Ce blocage cassette permet par exemple de louer des cassettes et de faire payer les utilisateurs en fonction du nombre de passages. Il permet, également, de payer les droits d'auteur en fonction du nombre de reproductions des œuvres.

Enfin, sur le plan de la qualité technique, une cassette peut être prédéterminée pour un nombre de passages X au-delà duquel elle ne peut plus être utilisée. Cette dernière application permet de garantir aux utilisateurs une qualité technique des reproductions d'œuvres. Le dispositif de blocage cassette comporte une roue de comptage uniquement sur une partie de sa périphérie, la partie non crantée comportant une butée d'arrêt.

Dans le cas où le blocage cassette est déverrouillable et où la cassette peut être programmée pour un nombre X de passages nouveaux, la roue de blocage comporte, sur sa partie non crantée, une butée de réarmement. Un moyen d'accès permet d'accéder à ladite butée de réarmement et, par là même, de manœuvrer ladite butée de réarmement. Le moyen d'accès peut être un tube dont l'ouverture peut être verrouillable au moyen d'une clef électronique ou mécanique. Par ledit tube, un moyen faisant office d'aiguille permet de remettre le compteur de blocage à zéro en appuyant sur ladite butée de réarmement, la roue de comptage tourne dans l'autre sens et vient, avec un compteur du nombre de passages prédéterminés, au zéro.

De même que, dans le premier dispositif décrit, la roue porte des chiffres qui correspondent au nombre de passages prédéterminés, au-delà duquel il y a blocage; ce chiffre apparaît par la fenêtre actuelle des cassettes qui permet de contrôler le défilement de la bande. Le blocage de la roue partiellement crantée et qui comporte une butée de blocage et/ou une butée de réarmement, bloque les balanciers et les palpeurs, une tension apparaît sur la bande ruban ou film; le lecteur magnétoscope ou autre appareil analogue comporte un dispositif de sécurité qui arrête l'appareil de lecture en disjonctant pour une certaine tension de la bande de film ou ruban.

L'ensemble des dispositifs comptage et blocage peut être combiné dans la même cassette. Dans ce cas, la contreplaque prend appui sur les deux axes des deux galettes des bobines et, éventuellement, sur des colonnes de soutien. Ladite contreplaque comprend, coaxialement à l'un des axes d'une galette, la roue crantée qui fait office de compteur et, coaxialement à l'autre axe de l'autre galette, la roue partiellement crantée qui porte une butée d'arrêt et une butée de réarmement. La roue crantée partiellement pour le blocage est actionnée de la même manière par un balancier, une came, une embase sur laquelle sont montés des palpeurs. La présence de ces deux palpeurs qui utilisent l'épaisseur des galettes de ruban évite tout système de ressort.

Selon un autre mode de réalisation, toujours selon l'invention, le dispositif de comptage et de blocage de la cassette peuvent être combinés sur deux roues, une roue de comptage et une roue de blocage qui se superposent coaxialement; ces deux roues coaxiales pouvant alors se placer coaxialement à l'une ou l'autre des galettes. La contreplaque est donc réduite de moitié en taille, mais le dispositif de came, balanciers, palpeurs, demeure identique et utilise toujours l'épaisseur des deux galettes.

Sans sortir du cadre de l'invention, on peut concevoir une roue de comptage et une roue de blocage qui utiliseraient un moyen d'action analogue au dispositif came, balanciers, palpeurs, mais utilisant, comme cela est déjà connu dans le brevet Action Design Limited FR publié sous le n° 2 296 907 et enregistré sous le n° 7 443 431, au moins un ressort de rappel externe.

Il existe déjà des brevets qui traitent du comptage du nombre de passages dans une cassette. Il s'agit du brevet Action Design Limited FR n° 2 296 907. Ce brevet décrit un dispositif de comptage qui est disposé dans une cassette spécialement prévue à cet effet. Il ne peut s'agir d'une cassette actuelle parce que la cassette est largement modifiée, le palpeur comporte un ressort de rappel. Ce brevet décrit un dispositif de comptage du nombre de passages pour la lecture d'une cassette à rubans, comportant un moyen faisant office de palpeur, qui réagit aux variations d'épaisseurs d'une galette d'enroulement du ruban, moyen comprenant en combinaison un palpeur et un compteur.

Au titre de l'état de la technique on peut citer 2 autres brevets: le brevet Sony FR n° 2 066 235 et le brevet Polydict FR n° 2 129 050. Le brevet Sony décrit une cassette qui est disposée dans un lecteur spécialement prévu pour compter le nombre de fois où l'on met la cassette dans le lecteur. Le compteur n'est donc pas intégré dans la cassette. Le brevet Polydict décrit un palpeur qui arrête de manière électronique la cassette en fin de bande. Voir dans les revendications la page 5, ligne 20, à page 6, ligne 3; dans la description la page 1 ligne 20.

Les dessins ci-joints donnés à titre d'exemple indicatif et non limitatif permettront aisément de comprendre l'invention, ils représentent un mode de réalisation préféré selon l'invention.

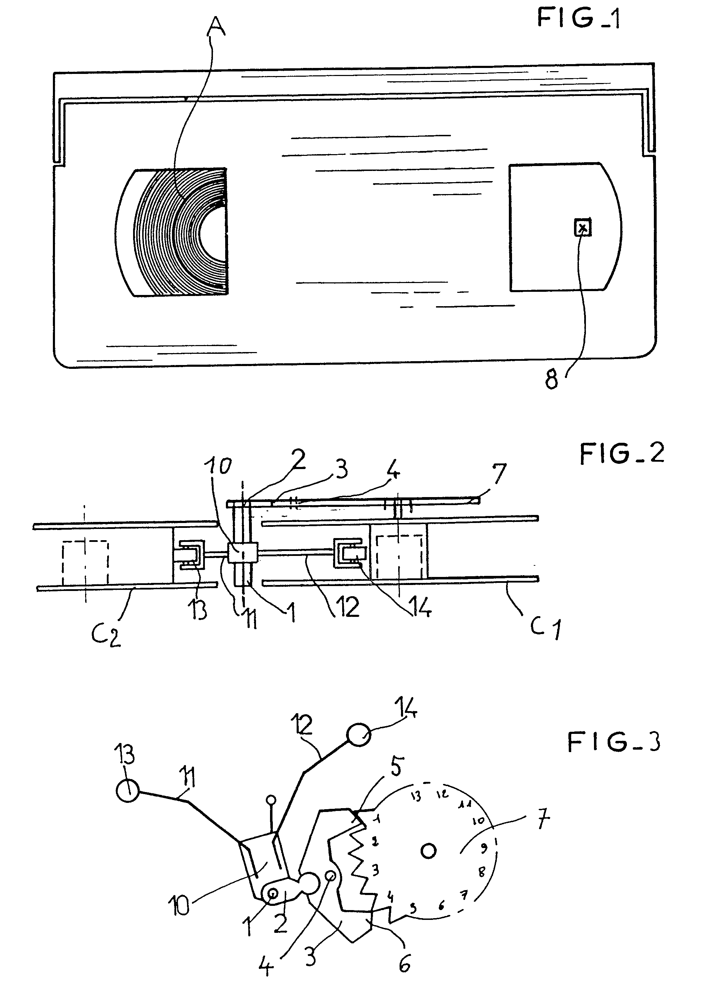

La fig. 1 est une vue en plan, vue extérieure de la cassette avec sa fenêtre de comptage du nombre de passages.

La fig. 2 est une vue schématique, vue de côté du mécanisme du dispositif.

La fig. 3 est une vue d'ensemble du dispositif, vu hors de la cassette.

La fig. 4 est une vue du dispositif selon l'invention mis en place dans la cassette, une galette de ruban étant au début de son déroulement.

La fig. 5 est la même vue que la fig. 4, mais la galette a été complètement déroulée.

Les fig. 6, 7 et 8 représentent en détail l'action de la came sur le balancier, ledit balancier ayant été modifié pour que le moment d'enclenchement soit retardé d'un demi cran sur la roue de comptage dans le but d'éviter la fraude ci-dessus décrite.

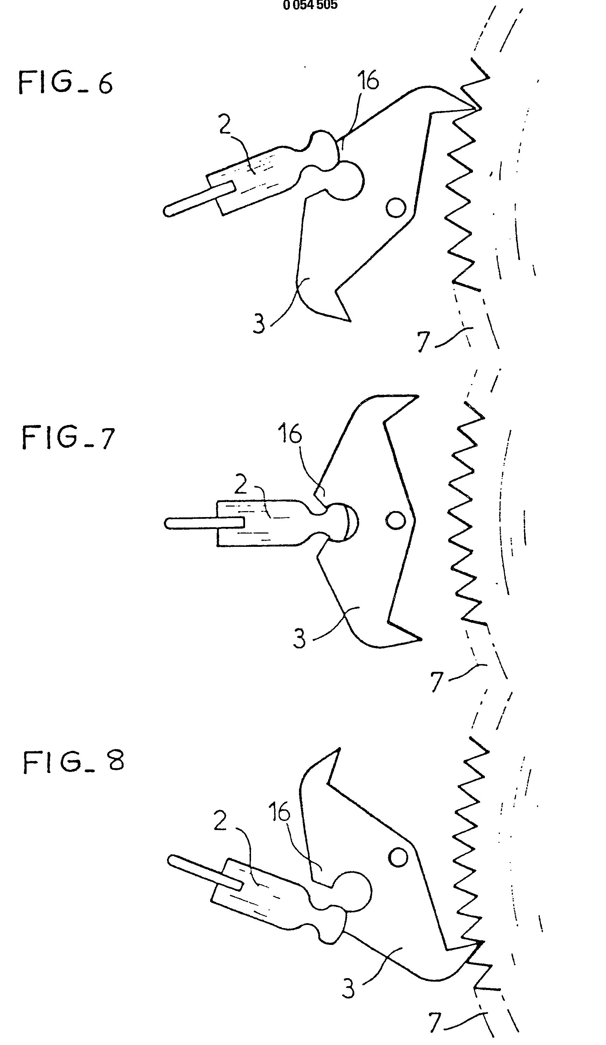

Les fig. 6, 7, 8 décrivent la cinématique de la came et dudit balancier. Le balancier a une forme spéciale qui comporte une encoche permettant l'échappement de la came en fin de travail.

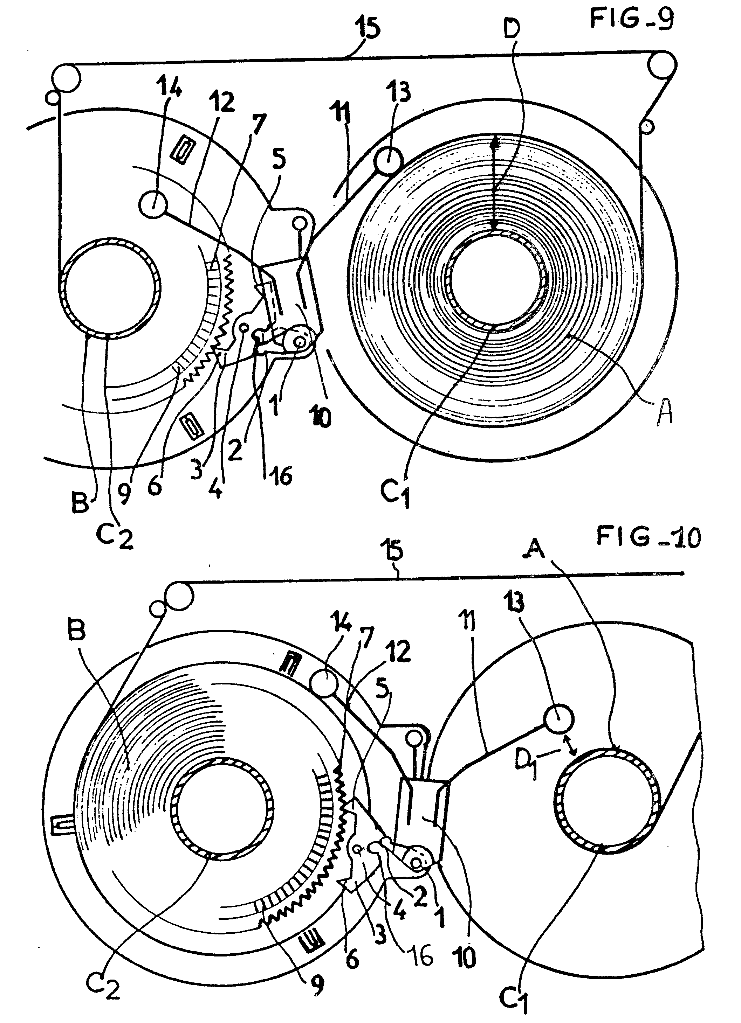

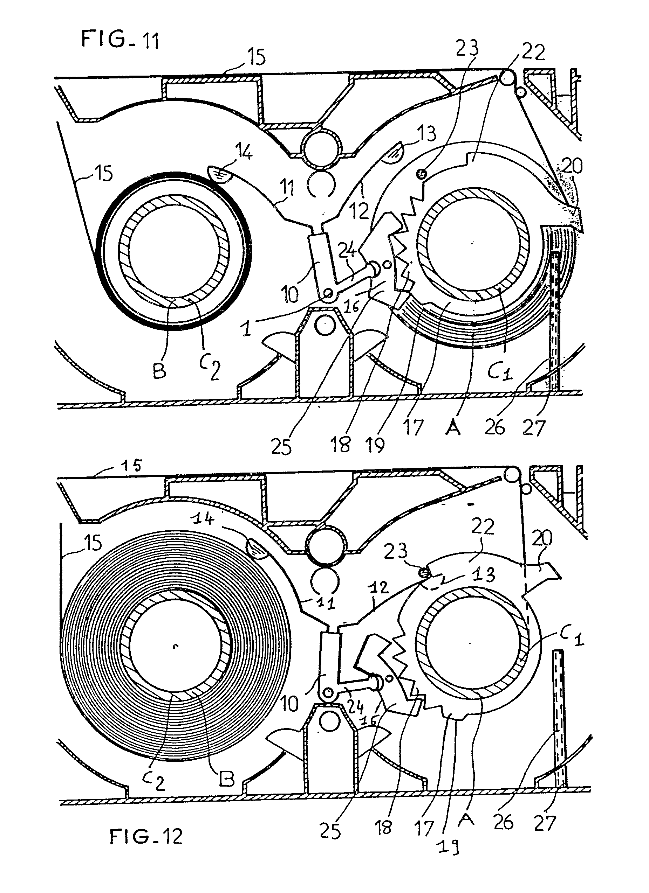

Les fig. 9 et 10 représentent des vues en plan de la cassette avec le balancier modifié tel que représenté dans les fig. 6, 7, 8.

La fig. 11 est une vue de la cassette vue en plan comportant une roue de blocage, ladite roue étant en position de blocage.

La fig. 12 est la même vue que la fig. 11 mais la roue de blocage est armée pour quelques passages.

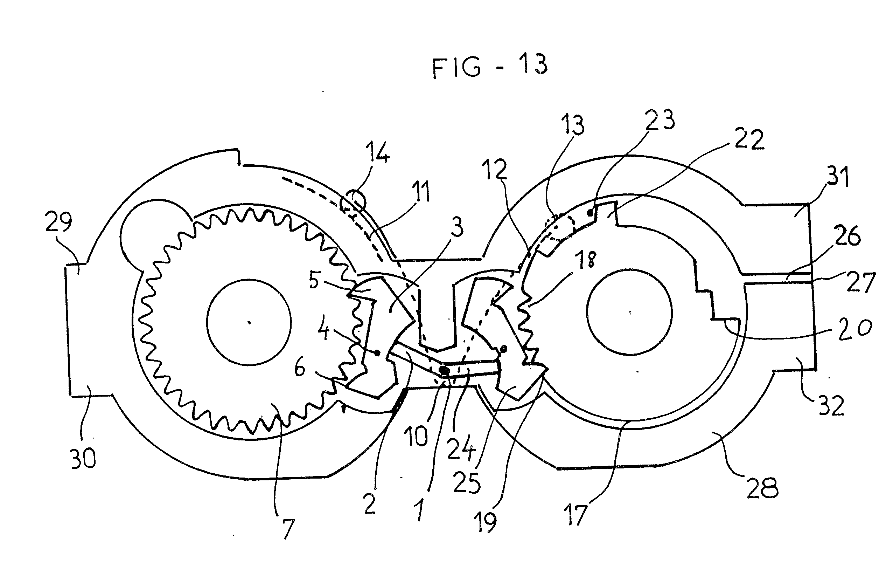

La fig. 13 est une vue d'ensemble, vue en plan de la contreplaque qui vient se poser entre le couvercle et les axes des galettes. Cette contreplaque comporte à gauche une roue de comptage et à droite une roue de blocage. Ladite contreplaque comporte deux balanciers.

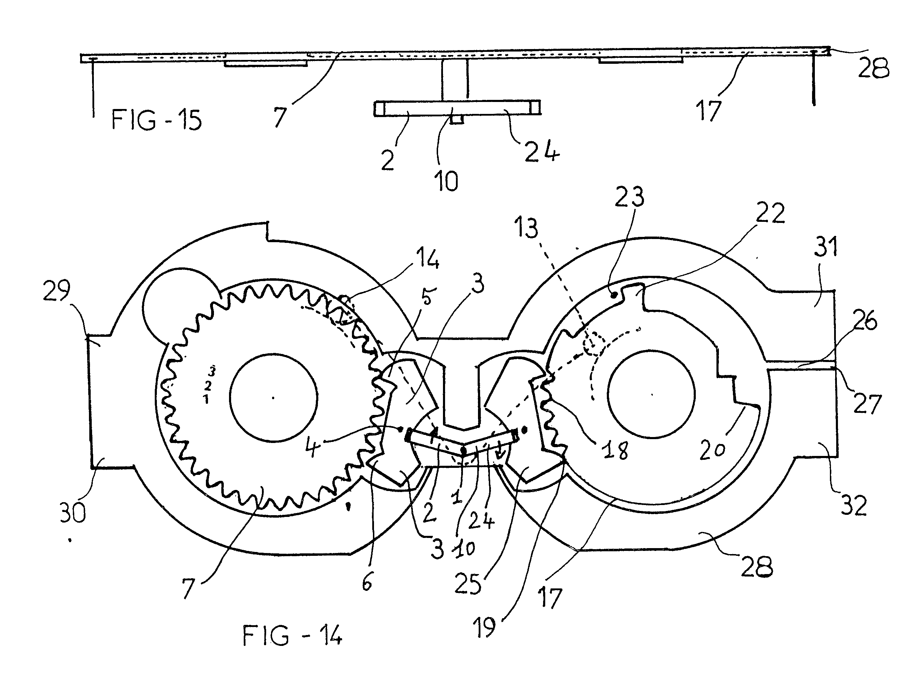

La fig. 14 est la même que celle représentée dans la fig. 13, mais où la roue de blocage est en position bloquée.

La fig. 15 est une vue en coupe de la contreplaque de l'embase, des cames.

Sur une colonne de soutien 1 est disposée une came 2 dont le déplacement actionne un balancier de comptage 3. Ce balancier de comptage 3, monté sur un axe 4, fait avancer, par ses extrémités 5 et 6, d'un demi cran une roue dentée 7 qui fait office de roue de comptage des passages et fait passer devant la fenêtre actuelle 8 le numéro 9 correspondant au nombre de passages.

La came 2 est solidaire de moyen faisant office de palpeur. Ledit moyen faisant office de palpeur est composé d'une embase 10 qui porte deux pendulaires 11 et 12 dont les extrémités sont pourvues de palpeurs 13 et 14.

Ces palpeurs 13 et 14 roulent ou frottent sur le ruban 15 qui défile de la galette A à la galette B et vice versa.

Ces palpeurs se déplacent en fonction de l'épaisseur D des galettes A et B, qui sont fonction de l'enroulement du ruban 15 sur les bobines C1, C2; en se déplaçant, les pendulaires 11 et 12 déplacent l'embase 10, donc la came 2, qui agit alors sur le balancier de comptage 3 qui fait tourner d'un demi cran la roue de comptage 7.

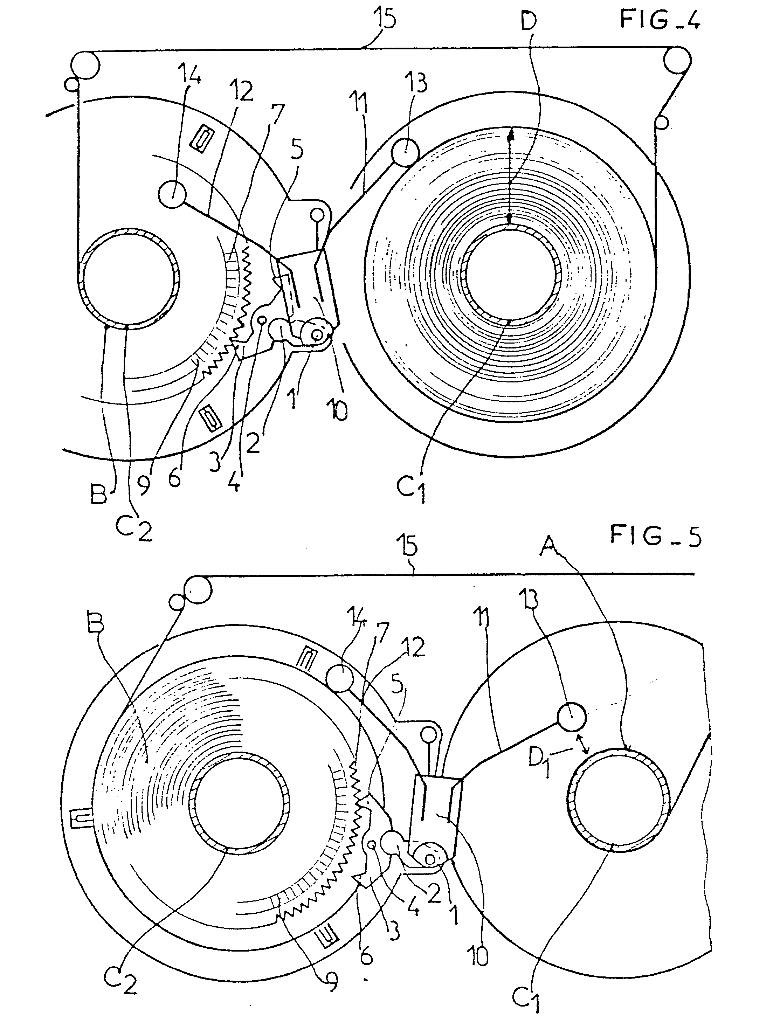

Le mécanisme est le suivant: lorsque la galette A est pleine, avant le premier passage, le pendulaire 11 est en position haute (voir fig. 4). Peu à peu le ruban 15 se déroule, la galette A se vide tandis que la galette B se remplit. L'épaisseur D du ruban 15 dans la galette A diminue, le pendulaire descend jusqu'à sa position la plus basse, sur la galette B; le galet 14 et son pendulaire sont montés à la position la plus haute, la came 2 a actionné le balancier qui, par une de ses extrémités 5 ou 6, a fait avancer la roue de comptage 7 d'un demi cran.

Lorsque la cassette est réembobinée dans l'autre sens, la galette B se déroule et la galette A se remplit; en fin d'enroulement le balancier de comptage 3, par ses extrémités 5 et 6, fait avancer d'un autre demi cran la roue de comptage 7.

La proportion des différentes pièces est calculée de manière à ce qu'en fonction de la taille des dents de comptage 7, les différents leviers aient assez de force pour faire tourner ladite roue de comptage.

L'angle que font entre eux les pendulaires est également fonction du diamètre des bobines, des galettes et de l'écartement desdites bobines. Ainsi, en fin de déroulement d'une galette, le pendulaire ne vient pas en contact avec la bobine C1, voir la fig. 5.

Il existe, en effet, une distance D1 entre le contacteur 13 et la bobine C1.

De manière à éviter qu'un utilisateur averti utilise une cassette en évitant le marquage du compteur, en arrêtant un peu avant la fin, le déroulement de la cassette, il est prévu de modifier un sixième de course au début et à la fin du défilement de la cassette. A cet effet, une forme spéciale a été donnée à l'encoche 16 du balancier de comptage 3, pour permettre l'échappement de la came 2 en fin de travail.

Dans les fig. 9 et 10, on comprend aisément comment l'encoche 16 du balancier de comptage 3 permet l'échappement de la came 2.

Le dispositif blocage de la cassette est composé d'une roue de blocage 17 crantée partiellement en 18, comportant au moins une butée de blocage 19, et une butée de réarmement 20. Dans les fig. 11–13 est représentée une autre butée d'arrêt de réarmement 22 qui vient buter contre un téton 23; comme indiqué plus haut, cette roue de comptage 17 est actionnée par des moyens mécaniques faisant office de palpeurs 10, 11, 12, 13, 14. Ces palpeurs sont montés sur une embase 10 qui agit par l'intermédiaire d'une came 2 sur le balancier de blocage 25. Des moyens d'accès 26, tel qu'un tube, permettent avec une clef, telle qu'une aiguille, d'agir sur la butée de réarmement 20 et de remettre la roue de blocage 17 en position réarmée pour un nombre prédéterminé de passages.

Dans les fig. 11 et 12, le loueur, le fabricant, le marchand de cassettes ou l'éditeur a introduit, dans le tube 26, une tige, non représentée, qui lui a permis de faire actionner la butée de réarmement 20 et de faire tourner dans l'autre sens la roue de blocage 17. Cette roue vient, par cette butée 22, s'arrêter contre le téton 23. On peut réarmer à volonté la cassette pour un nombre X prédéterminés de passages. De même, le moyen d'accès tel qu'un tube 26 peut comporter, au moyen de son ouverture 27, un moyen permettant de verrouiller l'accès. Ce moyen peut être mécanique ou électronique. Les fig. 13, 14 et 15 représentent le dispositif de blocage et de comptage disposé sur une contreplaque 28. On retrouve les mêmes éléments dont la forme peut être modifiée mais dont la fonction est identique pour obtenir le même résultat. Cette contreplaque 28, en combinaison avec le dispositif de blocage et le dispositif de comptage de la cassette, se trouve disposée entre le couvercle et les galettes A et B. La contreplaque 28 supporte la roue de blocage 17 et la roue de comptage 7, chaque roue étant disposée coaxialement avec l'un des galettes A, B. Sur les fig. 13 et 14, la roue de comptage 7 est coaxiale à la galette B et la roue de blocage 17 est coaxiale à la galette A. Pour cette contreplaque 28 et pour ce dispositif combiné de comptage et de blocage, on utilise des moyens faisant office de palpeurs tel que 10, 11, 12, 13, 14. Ces palpeurs 11, 12, 13, 14 actionnent par une même embase 10 deux cames 2, un balancier de blocage 25 et un balancier de comptage 3. Dans la fig. 14, la roue de blocage 17 est en position de blocage, le balancier 25 est bloqué au niveau de la butée de blocage 19.

La contreplaque 28 peut comporter plusieurs colonnes de soutien et de positionnement 29, 30, 31, 32 qui reposent sur le fond du socle de la cassette. Ces colonnes de soutien et de positionnement 29, 30, 31, 32 facilitent la mise en place de la contreplaque et de tout son dispositif de blocage et/ou de verrouillage sans aucune modification de la cassette existante.

Bien que cela ne soit pas représenté, il est possible de concevoir une contreplaque qui superposerait, coaxialement, au dessus d'une seule galette à la fois, la roue de comptage 7 et la roue de blocage 17. Les deux balanciers seront, dans ce cas, également superposés chacun au niveau de sa roue.

Une autre réalisation, selon l'invention, permet de prévoir un logement dans le fond du boîtier de la cassette qui peut recevoir ainsi la contreplaque qui porte tous les éléments du dispositif de comptage et/ou de blocage-cassette. Le logement est effectué en creusant un évidement dans le moule d'injection ainsi que des trous pour les axes nécessaires. Cette réalisation n'est pas représentée sur les figures.

**Revendications**

1. Dispositif de comptage du nombre de passages pour la lecture d'une cassette à rubans ou films, supports de sons et/ou d'images ou autre signaux, comportant un moyen faisant office de palpeur (10, 11, 12, 13, 14) qui, en réagissant aux variations d'épaisseur (D) des galettes (A, B) formées par l'enroulement du ruban (15) de la bande d'enregistrement sur les bobines (C1, C2) de ladite cassette, actionne une roue de comptage (7) portant des numéros (9) correspondant au nombre de passages, caractérisé en ce que la roue de comptage (7) coaxialement disposée avec l'une des galettes (A, B) et reposant par son axe sur l'axe de la bobine (C1 ou C2) qu'elle recouvre, est entraînée par engrenage par le moyen faisant office de palpeur (10, 11, 12, 13, 14) par l'intermédiaire d'une came (2) agissant sur un balancier de comptage (3), et en ce que l'ensemble palpeur-compteur (1 à 7 et 9 à 14) vient s'emboîter entre le couvercle de la cassette et le ou les flasques supérieurs des galettes d'enroulement (A, B) par une contreplaque (28) qui prend appui, d'une part sur l'axe d'une des bobines (C1, C2) et d'autre part sur une ou plusieurs colonnes de soutien (1, 29, 30, 31, 32), celles-ci reposant sur le fond du socle de la cassette.

2. Dispositif selon la revendication 1, caractérisé par le fait que la disposition coaxiale de la roue de comptage (7) avec une des galettes (A, B) permet d'utiliser comme fenêtre de visualisation des numéros (9) de la roue de comptage (7), la fenêtre actuelle (8) existant dans toute cassette pour contrôler le défilement du ruban (15).

3. Dispositif selon l'une des revendications 1 ou 2, caractérisé par le fait que la contreplaque (28) qui repose sur le flasque supérieur d'une des bobines (C1, C2) soutient, par l'axe d'une des bobines, la roue de comptage (7) et le balancier de comptage (3).

4. Dispositif selon l'une des revendications 1, 2 ou 3, caractérisé par le fait que le moyen faisant office de palpeur (11, 12, 13, 14) comporte deux pendulaires (11 et 12) qui portent à leurs extrémités des moyens faisant office de galets (13, 14), l'ensemble de ce moyen faisant office de palpeur (11, 12, 13, 14) reposant sur une colonne de soutien (1) disposée entre les deux galettes (A, B).

5. Dispositif selon la revendication 4, caractérisé par le fait que la colonne de soutien (1) supporte d'une part par l'intermédiaire d'une embase (10) qui les relie entre eux, les deux pendulaires (11, 12) et d'autre part, immédiatement au-dessus, la came (2) d'entraînement du balancier (3).

6. Dispositif selon la revendication 1, caractérisé en ce que l'enclenchement du balancier de comptage (3) sur la roue de comptage (7) s'effectue au milieu du déroulement du ruban (15) de manière à éviter toute fraude en utilisant un moyen qui neutralise une partie de la course au début et à la fin du défilement.

7. Dispositif selon l'une des revendications 1 ou 6, caractérisé par le fait que le balancier de comptage (3) a une forme spéciale telle qu'une encoche (16) qui permet l'échappement de la came (2).

8. Dispositif selon les revendications 1 à 7, caractérisé par le fait qu'une roue de blocage (17) compte le nombre de passages et qu'au delà d'un nombre déterminé, une butée de blocage (19) bloque ladite roue de blocage (17) qui crée une tension du ruban (15), ce qui entraîne l'arrêt ou le disjonctage du lecteur, magnétophone ou magnétoscope.

9. Dispositif selon la revendication 8, caractérisé par le fait que la roue de blocage (17) est une roue crantée partiellement en (18) qui comporte au moins une butée de blocage (19) et une butée de réarmement (20).

10. Dispositif selon l'une des revendications 8 ou 9, caractérisé par le fait que la roue de blocage (17) est actionnée par un balancier de blocage (25), une seconde came (24), et le jeu de palpeurs (11, 12, 13, 14) montés sur l'embase (10).

11. Dispositif selon l'une des revendications 9 ou 10, caractérisé par le fait qu'il comprend un moyen d'accès (26) tel qu'un tube qui permet, avec un moyen tel qu'une aiguille, d'agir sur la butée de réarmement (20) et de faire tourner la roue de blocage (17) dans le sens contraire de celui du défilement, en position réarmée pour un ombre déterminé de passages.

12. Dispositif selon l'une des revendications 9, 10 ou 11, caractérisé par le fait que la butée de réarmement (20) est manœuvrée jusqu'à ce qu'elle vienne buter contre un téton d'arrêt de réarmement (23) qui peut être placé, au préalable à plusieurs endroits adéquats et ce, en fonction d'un nombre prédéterminé de passages.

13. Dispositif selon l'une des revendications 11 ou 12, caractérisé par le fait que le moyen d'accès (26) est verrouillable au moyen d'une clef mécanique et/ou électronique.

14. Dispositif selon l'une des revendications 8 à 13, caractérisé par le fait que la contreplaque (28) supporte la roue de blocage (17) et la roue de comptage (7), chaque roue étant disposée coaxialement avec l'une des galettes (A, B).

15. Dispositif selon l'une des revendications 8 à 14, caractérisé par le fait que la contreplaque (28) supporte la roue de blocage (17) et la roue de comptage (7) qui se superposent et sont disposées coaxialement avec une seule des galettes (A, B).

16. Dispositif selon l'une des revendications 1 à 15, caractérisé par le fait que la contreplaque (28) qui porte tous les éléments dudit dispositif de comptage et/ou de blocage est disposée dans un logement effectué en creusant un évidement dans le moule d'injection ainsi que des trous nécessaires pour les axes.

**Patentansprüche**

1. Vorrichtung zum Zählen der Anzahl von Abspielungen für die Wiedergabe eines in einer Kassette enthaltenen Bands oder Films mit Ton- und/oder Bild- oder anderen Signalen,

– mit einer als Taster (10, 11, 12, 13, 14) dienenden Einrichtung, die auf die Änderungen der Dikke (D) von Wickeln (A, B) reagiert, die durch das Aufwickeln eines Bands (15) des Aufzeichnungsträgers auf Spulen (C1, C2) dieser Kassette gebildet sind, und die ein Zählrad (7) bewegt, das der Anzahl der Abspielung entsprechende Zahlen (9) trägt, dadurch gekennzeichnet,
– dass das Zählrad (7), das mit dem einen der Wickel (A, B) koaxial angeordnet ist und mit seiner Achse auf der Achse der von ihr bedeckten Spule (C1 oder C2) ruht, durch Eingriff mit der als Taster (10, 11, 12, 13, 14) dienenden Einrichtung mittels eines Nockens (2) angetrieben wird, der auf einen Zählschwinghebel (3) wirkt, und
– dass die Anordnung Taster-Zähler (1 bis 7 und 9 bis 14) zwischen dem Deckel der Kassette und den oder die oberen Flanschen der Aufspulwickel (A, B) mittels einer Gegenplatte (28) eingepasst ist, die sich einerseits auf der Achse einer der Spulen (C1, C2) und andererseits auf einer oder mehreren Stützsäulen (1, 29, 30, 31, 32) abstützt, die am Boden der Grundplatte der Kassette ruhen.

2. Vorrichtung nach Anspruch 1, dadurch gekennzeichnet,

– dass die koaxiale Anordnung des Zählrads (7) mit einem der Wickel (A, B) die Verwendung des in jeder Kassette zur Kontrolle des Abspulens des Bands (15) vorhandenen üblichen Fensters als Anzeigefenster für die Zahlen (9) des Zählrads gestattet.

3. Vorrichtung nach einem der Ansprüche 1 oder 2, dadurch gekennzeichnet,

– dass die Gegenplatte, die auf dem oberen Flansch einer Spule (C1, C2) ruht, mittels der Achse einer der Spulen das Zahnrad (7) und den Zählschwinghebel (3) trägt.

4. Vorrichtung nach einem der Ansprüche 1, 2 oder 3, dadurch gekennzeichnet,

– dass die als Taster (11, 12, 13, 14) dienende Einrichtung zwei Pendelarme (11 und 12) aufweist, die an ihren Enden als Rollen dienende Einrichtungen aufweisen, wobei die Gesamtheit dieser als Taster (11, 12, 13, 14) wirkenden Einrichtung auf einer zwischen den beiden Wickeln (A, B) angeordneten Stützsäule (1) ruht.

5. Vorrichtung nach Anspruch 4, dadurch gekennzeichnet,

– dass die Stützsäule (1) folgendes trägt: einerseits mittels einer Fussplatte (10) die beiden hierdurch miteinander verbundenen Schwenkarme (11, 12) und andererseits unmittelbar darüber den Nocken (2) für den Antrieb des Schwinghebels (3).

6. Vorrichtung nach Anspruch 1, dadurch gekennzeichnet,

– dass das Einrasten des Zählschwinghebels (3) am Zählrad (7) inmitten des Ablaufs des Bands (15) derart erfolgt, dass jeder Betrug durch Verwendung einer Einrichtung vermieden wird, die einen Teil der Strecke zu Beginn und am Ende des Abspulens neutralisiert.

7. Vorrichtung nach einem der Ansprüche 1 oder 6, dadurch gekennzeichnet,

– dass der Zählschwinghebel (3) eine spezielle Form, wie eine Raste (16), aufweist, die die Hemmung des Nockens (2) gestattet.

8. Vorrichtung nach den Ansprüchen 1 bis 7, dadurch gekennzeichnet,

– dass ein Sperrad (17) die Anzahl der Abspielungen zählt und
– dass über einer gegebenen Anzahl ein Sperranschlag (19) das Sperrad (17) festlegt, das eine Spannung des Bands (15) erzeugt, was das Anhalten und Ausschalten des Wiedergabegeräts, Magnetbandgeräts oder Magnetbildaufzeichnungsgeräts bewirkt.

9. Vorrichtung nach Anspruch 8, dadurch gekennzeichnet,

– dass das Sperrad (17) ein bei (18) teilweise verzahntes Rad ist, das wenigstens einen Sperranschlag (19) und einen Rückstellanschlag (20) aufweist.

10. Vorrichtung nach einem der Ansprüche 8 oder 9, dadurch gekennzeichnet,

- dass das Sperrad (17) von einem Sperrschwinghebel (25), einem zweiten Nocken (24) und dem Satz von an der Fussplatte (10) befestigten Tastern (11, 12, 13, 14) betätigt wird.

11. Vorrichtung nach einem der Ansprüche 9 oder 10, gekennzeichnet

- durch eine Zugangseinrichtung (26), wie ein Rohr, das mit einer Einrichtung, wie einer Nadel, folgendes ermöglicht: auf den Rückstellanschlag (20) einzuwirken und das Sperrad (17) entgegengesetzt zur Abspulrichtung um eine gegebene Anzahl von Schritten in eine rückgestellte Stellung zu drehen.

12. Vorrichtung nach einem der Ansprüche 9, 10 oder 11, dadurch gekennzeichnet,

- dass der Rückstellanschlag (20) bewegt wird, bis er an einem Zapfen (23) für das Anhalten der Rückstellung anliegt, der vorher an mehreren passenden Orten plaziert werden kann, und zwar in Abhängigkeit von einer gegebenen Anzahl von Abspielungen.

13. Vorrichtung nach einem der Ansprüche 11 oder 12, dadurch gekennzeichnet,

- dass die Zugangseinrichtung (26) mittels eines mechanischen und/oder elektronischen Schlüssels verriegelbar ist.

14. Vorrichtung nach einem der Ansprüche 8 bis 13, dadurch gekennzeichnet,

- dass die Gegenplatte (28) das Sperrad (17) und das Zählrad (7) trägt, wobei jedes Rad koaxial mit einem der Wickel (A, B) angeordnet ist.

15. Vorrichtung nach einem der Ansprüche 8 bis 14, dadurch gekennzeichnet,

- dass die Gegenplatte (28) das Sperrad (17) und das Zählrad (7) trägt, die übereinanderliegen und koaxial mit einem einzigen Wickel (A, B) angeordnet sind.

16. Vorrichtung nach einem der Ansprüche 1 bis 15, dadurch gekennzeichnet,

- dass die Gegenplatte (28), die alle Elemente der Zähl- und/oder Sperrvorrichtung trägt, in einem Sitz angeordnet ist, der dadurch hergestellt wird, dass in der Spritzgussform eine Ausnehmung und die für die Achsen erforderlichen Löcher hergestellt werden.

## Claims

1. A device for counting the number of times a tape or film cassette carrying recorded sounds and/or images or other signals can be played comprising a means acting as a sensor (10, 11, 12, 13, 14) which, by reacting to the variations in the thickness (D) of the coils (A, B) formed as the recording tape (15) is wound on to the spools (C1, C2) of said cassette, operates a counter-wheel (7) bearing numbers (9) corresponding to the number of times the cassette is played, characterised in that the counter-wheel positioned coaxially with one of the coils (A, B) and resting with its pivot on the pivot of the spool (C1, C2) which it covers is entrained in mesh by the means acting as a sensor (10, 11, 12, 13, 14) through the intermediary of a cam (2) operating a counting rocker (3), and in that the sensor and counter assembly (1 to 7 and 9 to 14) is inserted between the cover of the cassette and the upper side or sides of the coils of tape (A, B) by means of a reinforcing plate (28) which is supported firstly on the pivot of one of the spools (C1, C2) and secondly on one or more supporting columns (1, 29, 30, 31, 32), the latter resting on the bottom of the base of the cassette.

2. A device as in Claim 1, characterised by the fact that the coaxial positioning of the counter-wheel (7) with one of the coils (A, B) allows the window (8) at present found in all cassettes for checking the passage of the tape (15) to be used as a window to display the numbers (9) on the counter-wheel (7).

3. A device as in one of Claims 1 or 2, characterised by the fact that the reinforcing plate (28) resting on the upper side of one of the spools (C1, C2) supports the counter-wheel (7) and the counting rocker (3) through the pivot of one of the spools.

4. A device as in one of Claims 1, 2 or 3, characterised by the fact that the means acting as sensor (11, 12, 13, 14) comprises two pendular arms (11 and 12) which at their ends carry means acting as rollers (13, 14), the whole of this means acting as sensor (11, 12, 13, 14) resting on a supporting column (1) placed between the two coils (A, B).

5. A device as in Claim 4, characterised by the fact that the supporting column (1) supports firstly the two pendular arms (11, 12) by means of a carrier (10) which links them to each other, and secondly, directly above, the cam (2) operating the rocker (3).

6. A device as in Claim 1, characterised by the fact that the engagement of the counting rocker (3) on the counter-wheel (7) is effected in the middle of the tape (15) so as to prevent any infringement by using a means which neutralises part of the length of the tape at the beginning and end of playback.

7. A device as in one of Claims 1 or 6, characterised by the fact that the counting rocker (3) has a special shape like a slot (16) that allows release of the cam (2).

8. A device as in Claims 1 to 7, characterised by the fact that a locking wheel (17) counts the number of times the cassette is played and that after a predetermined number, a locking stop (19) locks said locking wheel (17), creating tension in the tape (15) which leads to the stoppage or disconnection of the player, tape recorder or video recorder.

9. A device as in Claim 8, characterised by the fact that the locking wheel (17) is a wheel partly toothed at (18) which comprises at least one locking stop (19) and a resetting stop (20).

10. A device as in one of Claims 8 or 9, characterised by the fact that the locking wheel (17) is operated by a locking rocker (25), a second cam (24) and the set of sensors (11, 12, 13, 14) mounted on the carrier (10).

11. A device as in one of Claims 9 or 10, characterised by the fact that it comprises a means of access (26) such as a tube which makes it possible, with a means such as a needle, to operate the resetting stop (20) and turn the locking wheel (17) in the opposite direction to that of playback to a position in which it is reset so that the cassette can be played a given number of times.

12. A device as in one of Claims 9, 10 or 11, characterised by the fact that the resetting stop (20) is operated until it abuts against a resetting stop nipple (23) which may be located beforehand at a plurality of suitable points according to the pre-determined number of times the cassette can be played.

13. A device as in one of Claims 11 or 12, characterised by the fact that the means of access (26) can be locked by means of a mechanical and/or electronic key.

14. A device as in one of Claims 8 to 13, characterised by the fact that the reinforcing plate (28) supports the locking wheel (17) and the counterwheel (7), each wheel being disposed coaxially with one of the coils (A, B).

15. A device as in one of Claims 8 to 14, characterised by the fact that the reinforcing plate (28) supports the locking wheel (17) and the counterwheel (7), which are superposed on each other and are disposed coaxially with only one of the coils (A, B).

16. A device as in one of Claims 1 to 15, characterised by the fact that the reinforcing plate (28) which carries all the elements of said counting and/or locking device is disposed in a housing produced by scooping out a hollow in the injection mould, together with the necessary holes for the pivots.

0 054 505

FIG_1

FIG_2

FIG_3

FIG_4

FIG_5

FIG_6

FIG_7

FIG_8

0 054 505

FIG_9

FIG_10

0 054 505

FIG. 11

FIG. 12

17

FIG - 13

FIG - 15

FIG - 14

0 054 505